# EUROPÄISCHE PATENTSCHRIFT

(11) **EP 1 121 259 B1**
(45) Veröffentlichungstag und Bekanntmachung des Hinweises auf die Patenterteilung: **10.07.2002**
(21) Anmeldenummer: 99953788.9
(22) Anmeldetag: 12.10.1999
(51) Int. Cl.: B60K 15/03

(54) **KRAFTSTOFFBEHÄLTER FÜR KRAFTFAHRZEUGE MIT BRENNSTOFFZELLENANTRIEB**
FUEL TANK FOR AUTOMOBILES WITH FUEL CELL DRIVE
RESERVOIR A CARBURANT POUR VEHICULES AUTOMOBILES POURVUS D'UN ENTRAINEMENT A PILE A COMBUSTIBLE

(30) Priorität: 13.10.1998 DE 19846895
(43) Veröffentlichungstag der Anmeldung: 08.08.2001
(73) Patentinhaber: Basell Polyolefine GmbH, 77694 Kehl (DE); BASF AKTIENGESELLSCHAFT, 67056 Ludwigshafen (DE)
(72) Erfinder: ROHDE, Wolfgang, D-67346 Speyer (DE); OPPENLÄNDER, Knut, D-67061 Ludwigshafen (DE); HÖLZLE, Markus, D-67281 Kirchheim (DE); SAUSEN, Eckhard, D-73635 Rudersberg (DE)
(74) Vertreter: Meyer, Thomas Hans
(86) Internationale Anmeldenummer: EP9907662
(87) Internationale Veröffentlichungsnummer: WO0021772

(56) Entgegenhaltungen:
- GB-A- 2 215 685
- US-A- 3 804 292
- US-A- 4 536 188

## Beschreibung

Die vorliegende Erfindung betrifft einen Kraftstoffbehälter für Kraftfahrzeuge verbunden mit einem ein flammenfärbendes Additiv enthaltenden Zusatzgefäß wobei ein Messwertaufnehmer im Falle eines Störsignals die Zugabe des flammenfärbenden Additivs aus dem Zusatzgefäß in den Kraftstoffbehälter bewirkt. Sie betrifft weiterhin ein Verfahren zum Versetzen eines Kraftstoffes in einem Kraftstoffbehälter mit einem flammenfärbenden Additiv.

Kraftfahrzeuge mit Brennstoffzellenantrieb enthalten entweder einen Vorratsbehälter für Wasserstoff, oder sie erzeugen zunächst mittels eines Reformingkatalysators aus Alkoholen Wasserstoff, aus dem in einem zweiten Schritt in der eigentlichen Brennstoffzelle elektrischer Strom für den Antrieb des Fahrzeuges gewonnen gewonnen (siehe z.B. "Hightech Report '98" Daimler Benz AG, Kommunikation, 70546 Stuttgart). Die letztgenannten Fahrzeuge benötigen ebenso wie mit konventionellen Verbrennungsmotoren angetriebene Fahrzeuge Kraftstoffbehälter bzw. Tanks zur Aufnahme des flüssigen Kraftstoffes. Die als Kraftstoff eingesetzten Alkohole, vor allem Methanol oder Ethanol, verbrennen aber im Gegensatz zu Otto- oder Dieselkraftstoffen mit fahl bläulicher oder fast unsichtbarer Flamme. Diese Eigenschaft von Alkoholen stellt für den Betrieb von Kraftfahrzeugen mit Brennstoffzellen ein erhebliches Sicherheitsrisiko dar. Kommt es im Zuge eines Unfalles des Kraftfahrzeuges zu einer Beschädigung des Tanks, gefolgt von Auslaufen und Entzünden des Alkohols, so kann die Alkoholflamme leicht unerkannt bleiben. In der Nähe befindliche Personen sind somit einer erheblichen Gefahr durch Verbrennungen oder Explosionen ausgesetzt. Außerdem werden Löscharbeiten erschwert.

Es ist daher erforderlich, Kraftstoffe für Kraftfahrzeuge mit Brennstoffzellenantrieb mit flammenfärbenden Additiven zu versetzen, um ein leichtes und schnelles Erkennen von Flammen zu gewährleisten. Flammenfärbende Additive sind prinzipiell bekannt.

So können Flammen von Alkoholen beispielsweise mit alkohollöslichen Verbindungen der Alkali- und Erdalkalimetalle sowie besonders mit Borverbindungen eingefärbt werden. Ein Zusatz von 0,2 Gew. % Borsäureethylester sorgt bereits für einen intensiv grüne Flamme. Möglich ist es auch, ungesättigte, organische Verbindungen wie bspw. Aromaten einzusetzen, die zur Rußbildung und Brennen mit leuchtender Flamme neigen.

Nachteiligerweise vergiften jedoch derartige Additive auch schon bei geringen Konzentrationen den der Brennstoffzelle vorgeschalteten Reforming-Katalysator ganz oder teilweise oder verringern dessen Lebensdauer erheblich. Darüber hinaus bergen manche der Additive (z.B. Aromaten) ein Toxizitätsproblem, so dass deren breiter Einsatz nicht ohne weiteres möglich ist.

Aufgabe der vorliegenden Erfindung war es daher, eine Lösung zu finden, Kraftstoffe für Kraftfahrzeuge mit Brennstoffzellenantrieb mit flammenfärbenden Additiven zu versetzen, die nicht die obengenannten Nachteile aufweist.

Erfindungsgemäß wird daher ein Kraftstoffbehälter verbunden mit einem ein flammenfärbendes Additiv enthaltenden Zusatzgefäß vorgeschlagen, wobei ein Messwertaufnehmer im Falle eines Störsignals die Zugabe des flammenfärbenden Additivs aus dem Zusatzgefäß in den Kraftstoffbehälter bewirkt. Weiterhin wird ein Verfahren zum Versetzen eines Kraftstoffes in einem Kraftstoffbehälter mit einem flammenfärbenden Additiv vorgeschlagen.

Der erfindungsgemäße Kraftstoffbehälter besteht aus dem Fachmann bekannten für Kraftstoffbehälter geeigneten Materialien, wie bspw. aus Kunststoffen wie bspw. Polyethylen hoher Dichte (HD-PE), Polyketon (PK), Polyamid (PA), mehrschichtigen Kunststoffverbundmaterialien oder aus Stahl oder Aluminium. Bevorzugt werden HD-PE oder Stahl. Bei den genannten Kunststoffverbundmaterialien handelt es sich bevorzugt um solche auf Basis HD-PE, welche eine Sperrschicht aus fluoriertem Polyethylen, aus EthylenVinylalkohol-Copolymer (EVOH) oder Polyamid enthalten. Die äussere Form wird vorteilhaft nach dem Fachmann bekannten Methoden optimal an das Fahrzeug, in den der Tank eingebaut werden soll, angepasst. Erfindungsgemäß ist der Kraftstoffbehälter mit einem ein flammenfärbendes Additiv enthaltenden Zusatzgefäß verbunden. Das Zusatzgefäß kann innerhalb des Kraftstoffbehälters, in der Wandung oder außerhalb des Kraftstoffbehälters angebracht sein. Bevorzugt ist das Zusatzgefäß im Kraftstoffbehälter angebracht. Die Form des Zusatzgefäßes kann geeignet gewählt werden. Das Zusatzgefäß ist abgeschlossen, so dass sich der Kraftstoff und das flammenfärbende Additiv im Normalbetrieb des Fahrzeuges nicht miteinander vermischen. Das Volumen des Zusatzgefäßes ist klein gegenüber dem Volumen des Kraftstoffbehälters. Im Regelfalle beträgt das Volumen nicht mehr als 10% des Volumens des Kraftstoffbehälters. Der Druck im Inneren des Zusatzgefäßes kann dem Aussendruck entsprechen, oder es kann auch Überdruck im Gefäß herrschen. Der Gefäßinnendruck kann vom Fachmann der jeweiligen konstruktiven Lösung in geeigneter Weise angepasst werden. Im Regelfalle beträgt der Gefäßinnendruck aber nicht mehr als 10 bar.

Der erfindungsgemäße Kraftstoffbehälter umfasst weiterhin einen Messwertaufnehmer, der im Falle eines Störsignals die Zugabe des flammenfärbenden Additivs aus dem Zusatzgefäß in den Kraftstoffbehälter bewirkt. Bei dem Messwertaufnehmer handelt es sich um Sensoren, die von Unfällen oder gefährlichen Betriebszuständen des Kraftfahrzeuges hervorgerufene Störsignale registrieren können. Beispiele für derartige Ereignisse sind Aufprall des Fahrzeuges auf ein Hindernis, Aufprall eines anderen Fahrzeuges, Überschlagen, Brand, überhöhte Temperatur des Tanks oder plötzliche Verzögerung des Fahrzeuges. In einer bevorzugten Ausführungsform handelt es sich bei dem Sensor um den in Kraftfahrzeugen gemäß dem Stand der Technik bereits vorhanden Sensor zur Auslösung des Airbags der vorteilhaft für den erfindungsgemäßen Zweck mitgenutzt werden kann. Es können auch mehrere Messwertaufnehmer, die auf unterschiedliche Störsignale reagieren können, optional durch eine logische Schaltung zusammengeschaltet, eingesetzt werden.

Der Messwertaufnehmer bewirkt beim Vorliegen eines Störsignals die Zugabe des flammenfärbenden Additivs aus dem Zusatzgefäß in den Kraftstoffbehälter. Der Messwertaufnehmer steuert eine Vorrichtung an, die das Zusatzgefäß zerbricht, öffnet, durchlöchert oder absprengt, wodurch das Additiv in den Kraftstoffbehälter gelangt und sich mit dem Kraftstoff vermischt.

Die Vorrichtung kann beispielsweise aus einem oder mehreren gespannten Bolzen bestehen, die durch den Sensor gelöst werden und das Zusatzgefäß zerbrechen oder durchlöchern. Die Vorrichtung kann beispielsweise auch ein Ventil umfassen, durch das eine Verbindung zwischen Zusatzbehälter und Kraftstofftank geöffnet wird, so dass das flammenfärbende Additiv austreten kann. In diesem Falle ist es vorteilhaft, dass das Zusatzgefäß unter Druck steht.

Wenngleich eine aktive, sensorgesteuerte Vorrichtung bevorzugt wird, umfasst die vorliegende Erfindung aber auch Vorrichtungen zum Zerbrechen des Zusatzgefäßes durch eine passive Mechanik, z.B. ein geeignet konstruiertes Pendelschlagwerk, welche die als Folge der Impulsänderung bei einem Unfall auftretende Stoßenergie zum Zerbrechen des Zusatzgefäßes nutzt.

Das Material des Zusatzgefäßes wird je nach der eingesetzten Vorrichtung zum Versetzen des Kraftstoffes mit dem flammenfärbenden Additiv geeignet gewählt. Prinzipiell geeignet sind beispielsweise Glas, keramische Werkstoffe, Metalle wie z.B. Stahl oder Aluminium oder Kunststoffe. Es wird außerdem so gewählt, dass das Material mit dem flammenfärbenden Additiv und dem Kraftstoff verträglich ist, und durch den Kraftstoff nicht angequollen wird. Bei Vorrichtungen, die das Zusatzgefäß zerbrechen, wird bevorzugt ein Material eingesetzt, welches ein gutes Bruchverhalten aufweist, d.h. durch einen Stoss leicht zerbricht. Geeignet sind beispielsweise Glas oder keramische Werkstoffe.

Bevorzugt ist das flammenfärbende Additiv flüssig oder es wird als Lösung, insbesondere als alkoholische Lösung eingesetzt. Geeignete alkoholische Lösungsmittel sind beispielsweise Methanol, Ethanol oder Isopropanol oder Gemische davon. Geeignete flammenfärbende Additive enthalten beispielsweise im wesentlichen Trimethylborat, Triethylborat, Borsäure, Natriumethanolat, Natriummethanolat, Benzol, Toluol, Xylol oder Lösungen höherer Aromaten. Es können auch Mischungen verschiedener flammenfärbender Additive eingesetzt werden.

Die Menge des flammenfärbenden Additivs im Zusatzgefäß wird so bemessen, dass auch bei vollem Kraftstofftank eine gute Flammenfärbung erreicht wird. Im Regelfalle befinden sich im Zusatzgefäß 0,1 bis 5 Gew. % bzgl. des Kraftstoffs, bevorzugt 0,3 bis 1 Gew.-%.

Ein mit dem erfindungsgemäßen Kraftstofftank ausgerüstetes Fahrzeug hat den Vorteil, dass das flammenfärbende Additiv nur im Falle eines Unfalles in den Kraftstoff gelangt. In einer vorteilhaften Ausgestaltung der Erfindung wird das flammenfärbende Additiv nur dann dem Kraftstoffes zugegeben, wenn ein Ereignis eintritt, welches auch den Airbag auslöst. Eine Vergiftung des Reforming-Katalysators im normalen Fahrzeugbetrieb ist somit ausgeschlossen. Darüber hinaus wird eine generelle Additivierung des Kraftstoffes vermieden, wodurch sich die Kosten des Kraftstoffes vermindern.

## Patentansprüche

1. Kraftstoffbehälter für Kraftfahrzeuge verbunden mit einem ein flammenfärbendes Additiv enthaltenden Zusatzgefäß wobei ein Messwertaufnehmer im Falle eines Störsignals die Zugabe des flammenfärbenden Additivs aus dem Zusatzgefäß in den Kraftstoffbehälter bewirkt.

2. Kraftstoffbehälter gemäß Anspruch 1, **dadurch gekennzeichnet, dass** es sich bei dem Messwertaufnehmer um einen Sensor handelt, durch den auch der Airbag des Kraftfahrzeuges ausgelöst wird.

3. Kraftstoffbehälter entsprechend der Ansprüche 1 oder 2 **dadurch gekennzeichnet, daß** er aus einem Kunststoff, Stahl oder Aluminium enthaltenden Werkstoff gefertigt wird, wobei das das flammenfärbende Additiv enthaltende Zusatzgefäß aus Kunststoff, Stahl, Aluminium, Glas oder keramische Werkstoffe enthaltenden Werkstoffen besteht.

4. Verfahren zum Versetzen eines Kraftstoffes in einem Kraftstoffbehälter mit einem flammenfärbenden Additiv, **dadurch gekennzeichnet, dass** bei einem Unfall des Kraftfahrzeuges eine Vorrichtung ausgelöst wird, durch deren Wirkung dem Kraftstoff ein flammenfärbendes Additiv zudosiert wird.

5. Kraftfahrzeug, umfassend einen Kraftstoffbehälter gemäß Ansprüchen 1 bis 3.

## Claims

1. A fuel tank for motor vehicles which is connected to a supplementary tank containing a flame-coloring additive, where a data recorder causes, in the event of a fault signal, the flame-coloring additive to be added to the fuel tank from the supplementary tank.

2. A fuel tank as claimed in claim 1, wherein the data recorder is a sensor which also triggers the vehicle's airbag.

3. A fuel tank as claimed in claim 1 or 2, which is made of a material containing a plastic, steel or aluminum, and the supplementary tank containing the flame-coloring additive is made of a material containing plastic, steel, aluminum, glass or ceramic.

4. A process for adding a flame-coloring additive to the fuel in a fuel tank, wherein, in the event of the vehicle being involved in an accident, a device is triggered which causes a flame-coloring additive to be metered into the fuel.

5. A motor vehicle containing a fuel tank as claimed in any of claims 1 to 3.

## Revendications

1. Réservoir de carburant pour véhicules à moteur relié à un récipient additionnel contenant un additif pour coloration des flammes, dans lequel un transducteur commande, dans le cas d'un signal de perturbation, l'addition de l'additif pour coloration des flammes du récipient additionnel dans le réservoir de carburant.

2. Réservoir de carburant selon la revendication 1, **caractérisé par le fait qu'**il s'agit, pour le transducteur, d'un palpeur par l'intermédiaire duquel également l'airbag du véhicule à moteur est déclenché.

3. Réservoir de carburant selon les revendications 1 ou 2, **caractérisé par le fait qu'**il est réalisé en un matériau contenant une matière plastique, de l'acier ou de l'aluminium, tandis que le récipient additionnel contenant l'additif de coloration des flammes est composé de matériaux contenant une matière plastique, de l'acier, de l'aluminium, du verre ou des matériaux céramiques.

4. Procédé pour l'addition à un carburant dans un réservoir de véhicule à moteur d'un additif pour coloration des flammes, **caractérisé par le fait que**, lors d'un accident du véhicule à moteur, un dispositif est déclenché, sous l'action duquel est ajouté en quantité dosée au carburant un additif pour coloration des flammes.

5. Véhicule à moteur, comportant un réservoir de carburant selon les revendications 1 à 3.
